# EUROPEAN PATENT APPLICATION

(11) **EP 1 734 505 A1**
(43) Date of publication of application: **20.12.2006**
(21) Application number: 05727459.9
(22) Date of filing: 31.03.2005
(51) Int. Cl.: G10H 1/00

(54) **MUSIC COMPOSITION DATA EDITION DEVICE AND MUSIC COMPOSITION DATA EDITION METHOD**

(30) Priority: 31.03.2004 JP 2004103767
(71) Applicant: MATSUSHITA ELECTRIC INDUSTRIAL CO., LTD., Kadoma-shi, Osaka 571-8501 (JP)
(72) Inventor: KOTANI, Hiroyuki Matsushita Electric Ind. Co.,Ltd., Chuo-ku Osaka-shi, Osaka 540-6319 (JP)
(74) Representative: Keck, Stephan
(86) International application number: PCT/JP2005/006375
(87) International publication number: WO 2005/096265

(57) **Abstract**

In a music composition data editing device and a music composition data editing method according to the present invention, music composition data comprises at least main data, ending data and connecting data being divided in the time-axis direction, wherein the reproduction time of the main data is calculated in bar unit, the main data is reproduced during the calculated reproduction time, and then the connecting data and the ending data are reproduced sequentially so as to carry out alignment at the start point and the end point of the reproduction time of input video/audio data.

## Description

### TECHNICAL FIELD

The present invention relates to a music composition data editing device and a music composition data editing method being used for editing music composition data by editing a general music composition so as to be aligned with the reproduction time of video/audio data and by adding the music composition to the video/audio data, and more particularly, to music composition data recording and reproduction in music composition data editing.

### BACKGROUND TECHNOLOGY

In recent years, as personal computers and their peripheral devices are advanced in performance, video/audio data obtained by carrying out photographing using digital video cameras has become able to be edited easily. Furthermore, many people have become to add a music composition as BGM (background music) to the edited video/audio data and to enjoy the obtained data as a piece of "work." However, the reproduction time, that is, the time-axis length, of the video/audio data obtained by carrying out photographing using digital video cameras or the like is different significantly according to the respective video/audio data. Moreover, in the case that the user attempts to add his or her favorite music composition as BGM to such video/audio data, it is necessary to edit the performance time of the music composition according to the time-axis length of the video/audio data. Hence, for the purpose of completing a piece of "work" by adding a favorite music composition as BGM to the video/audio data, the user must edit the performance time of the music composition.

In this editing, in the case that multiple pieces of video/audio data are connected, it is necessary to accurately end a music composition at the end of each piece of the video/audio data and to start the next music composition. However, in the case that different pieces of video/audio data are continuous as described above, when the performance time of a music composition is simply aligned with each piece of the video/audio data, music changes abruptly at the switching point of the video/audio data, and this causes a problem that the music is heard unnaturally at the switching point of the video/audio data. As a method for solving this kind of problem, a music editing method disclosed in Japanese Patent Application Laid-open 2001-296866 is used. In this conventional music editing method, a music composition to be used as BGM is data for electronic musical instruments, and this data is divided into melody data and code data beforehand for the purpose of editing. In the conventional music editing method, a music composition is edited according to video/audio data by changing the tempo of the music composition or correcting code data using melody data and code data being converted into data.
PATENT DOCUMENT 1 Japanese Patent Application Laid-open 2001-296866

### DISCLOSURE OF THE INVENTION

### PROBLEM TO BE SOLVED BY THE INVENTION

However, because music compositions being used generally are formed of digital audio data, the data can be divided in the time-axis direction but cannot be divided into melody data and code data. Hence, even if the user desires to select a favorite music composition from the music compositions generally used and to edit the selected music composition so as to be used as BGM, the music composition cannot be edited using the conventional music editing method described above.

For the purpose of solving the problem in the conventional music editing method, the present invention is intended to provide a music composition data editing device and a music composition data editing method, capable of carrying out editing so that music can be heard without arousing any uncomfortable feeling at the switching point of each piece of video/audio data by adding user's favorite music composition as BGM to edited video/audio data so as to carry out alignment at the start point and the end point thereof.

### MEANS FOR SOLVING PROBLEM

For the purpose of attaining the above-mentioned object, a music composition data editing device according to a first aspect of the present invention comprises:
a video/audio data input unit that receives video/audio data edited to have a predetermined reproduction time and divides the video/audio data into video data and audio data,
a music composition data memory unit that stores multiple pieces of music composition data each comprising main data (M), ending data (E), connecting data (C) and tempo data (T),
a music composition data editing unit that edits the music composition data so as to be aligned with the predetermined reproduction time of video/audio data input to the video/audio data input unit,
an audio data mixture unit that mixes the audio data divided using the video/audio data input unit with the music composition data edited using the music composition data editing unit, and
a video/audio data output unit that outputs the video data divided using the video/audio data and the audio data mixed using the audio data mixture unit. The music composition data editing device according to the first aspect of the present invention configured as described above can easily add user's favorite music composition so as to carry out alignment at the start point and the end point of the edited video/audio data, and can also add the music composition data selected by the user as BGM (background music) so as to be aligned with the video/audio data without arousing any uncomfortable feeling.

A music composition data editing device according to a second aspect of the present invention is configured so that the reproduction time of the main data of music composition data is calculated in bar unit, and the connecting data is disposed between the main data, the reproduction time of which is calculated, and the ending data so as to carry out alignment at the start point and the end point of the video/audio data input to the video/audio data input unit. The music composition data editing device according to the second aspect of the present invention configured as described above can accurately add the music composition data selected by the user in bar unit so as to carry out alignment at the start point and the end point of the video/audio data.

A music composition data editing device according to a third aspect of the present invention may be characterized in that the music composition data memory unit according to the first aspect has introduction data (S) divided from each piece of music composition data, and that the music composition data editing unit calculates the reproduction time of the main data of the music composition data in bar unit, disposes the introduction data at the beginning, disposes the main data, the reproduction time of which is calculated, next, and then disposes the connecting data and the ending data, so as to carry out alignment at the start point and the end point of the video/audio data input to the video/audio data input unit. The music composition data editing device according to the third aspect of the present invention configured as described above can add the music composition data selected by the user as BGM so as to be aligned with the video/audio data without arousing any uncomfortable feeling.

A music composition data editing method according to a fourth aspect of the present invention comprises:
an inputting step of inputting video/audio data edited to have a predetermined reproduction time,
a dividing step of obtaining the predetermined reproduction time of the video/audio data input at the inputting step and dividing the video/audio data into video data and audio data,
a selecting step of selecting music composition data from the music composition data memory unit that stores multiple pieces of music composition data each comprising main data (M), ending data (E), connecting data (C) and tempo data (T),
an editing step of calculating the reproduction time of the main data of the music composition data selected at the selecting step and disposing the connecting data between the main data, the reproduction time of which is calculated, and the ending data, so as to be aligned with the predetermined reproduction time of the video/audio data input at the inputting step,
a mixing step of mixing the audio data divided at the dividing step with the music composition data edited at the editing step, and
a step of outputting the video data divided at the dividing step and the audio data mixed at the mixing step. The music composition data editing method according to the fourth aspect of the present invention having the above-mentioned steps can easily add user's favorite music composition so as to carry out alignment at the start point and the end point of the video/audio data, and can also add the music composition data selected by the user as BGM so as to be aligned with the video/audio data without arousing any uncomfortable feeling.

A music composition data editing method according to a fifth aspect of the present invention is characterized in that, at the editing step according to the fourth aspect, the reproduction time of the main data of the music composition data selected at the selecting step is calculated in bar unit, and the connecting data is disposed between the main data, the reproduction time of which is calculated, and the ending data so as to carry out alignment at the start point and the end point of the video/audio data input at the inputting step. The music composition data editing method according to the fifth aspect of the present invention having the above-mentioned steps can accurately add the music composition data selected by the user so as to carry out alignment at the start point and the end point of the video/audio data.

A music composition data editing method according to a sixth aspect of the present invention may be characterized in that the music composition data memory unit according to the fourth aspect has introduction data extracted from music composition data, and that, at the editing step, the reproduction time of the main data of the music composition data selected at the selecting step is calculated in bar unit, the introduction data is disposed at the beginning, the main data, the reproduction time of which is calculated, is disposed next, and then the connecting data and the ending data are disposed, so as to carry out alignment at the start point and the end point of the video/audio data input at the inputting step. The music composition data editing method according to the sixth aspect of the present invention having the above-mentioned steps can add the music composition data selected by the user as BGM so as to be aligned with the video/audio data without arousing any uncomfortable feeling.

A music composition data recording method according to a seventh aspect of the present invention is characterized in that at least the ending portion of music composition data is recorded as ending data, that the main portion of the music composition data is recorded as main data, that unit data, the code information of which is dominant, or unit data changing from subdominant to dominant is recorded as connecting data, and that the tempo information of the music composition data is recorded. The music composition data recording method according to the seventh aspect of the present invention carrying out the above-mentioned operations can easily add user's favorite music composition so as to carry out alignment at the start point and the end point of the video/audio data.

A music composition data recording method according to an eighth aspect of the present invention may be characterized in that the introduction portion of the music composition data according to the seventh aspect is recorded as introduction data, and that the music composition data comprises the introduction data, the main data, the ending data, the connecting data and the tempo data. The music composition data recording method according to the eighth aspect of the present invention carrying out the above-mentioned operations can add the music composition data selected by the user as BGM so as to be aligned with the video/audio data without arousing any uncomfortable feeling.

A music composition data reproducing method according to a ninth aspect of the present invention is a method for reproducing the music composition data recorded using the music composition data recording method according to the seventh aspect during a predetermined time, comprising:
a step of subtracting the reproduction time of the connecting data and the reproduction time of the ending data from the predetermined time,
a step of calculating the reproduction time of the main data in bar unit during the reproduction time calculated at the subtracting step, and
a step of reproducing the main data during the reproduction time calculated in bar unit, and then reproducing the connecting data and the ending data sequentially. The music composition data reproducing method according to the ninth aspect of the present invention having the above-mentioned steps can accurately add user's favorite music composition in bar unit so as to carry out alignment at the start point and the end point of the video/audio data.

A music composition data reproducing method according to a 10th aspect of the present invention is a method for reproducing the music composition data recorded using the music composition data recording method according to the eighth aspect during a predetermined time, comprising:
a step of subtracting the reproduction time of the introduction data, the reproduction time of the connecting data and the reproduction time of the ending data from the predetermined time,
a step of calculating the reproduction time of the main data in bar unit in the reproduction time calculated at the subtracting step, and
a step of reproducing the introduction data at the beginning, and reproducing the main data during the reproduction time calculated in bar unit, and then reproducing the connecting data and the ending data sequentially. The music composition data reproducing method according to the 10th aspect of the present invention having the above-mentioned steps can add the music composition data selected by the user as BGM so as to be aligned with the video/audio data without arousing any uncomfortable feeling.

A music composition data reproducing method according to an 11th aspect of the present invention is a method for reproducing the music composition data recorded using the music composition data recording method according to the seventh aspect during a predetermined time, comprising:
a judging step of judging whether the total of the reproduction times of the main data and the ending data of the music composition data is equal to or less than the predetermined time,
a step of calculating the total number of performance bars by multiplying tempo information to the predetermined time if the total reproduction time of the main data and the ending data is equal to or less than the predetermined time at the judging step,
a step of calculating the number of bars of the main data by multiplying tempo information to the reproduction time of the main data,
a step of calculating the number of bars of the ending data by multiplying tempo information to the reproduction time of the ending data,
a step of calculating the number of bars of the connecting data by multiplying tempo information to the reproduction time of the connecting data,
a step of calculating the number of repetition times of the main data by subtracting the number of bars of the ending data from the total number of performance bars and by dividing the result of the subtraction by the number of bars of the main data, and calculating the number of extra bars of the main data as the remainder of the division,
a step of subtracting the number of bars of the connecting data from the number of extra bars of the main data and subtracting one from the number of repetition times of the main data if the result of the subtraction is negative, and adding the number of bars of the main data to the number of extra bars of the main data,
a step of calculating the reproduction time of the extra portion of the main data by dividing the number of extra bars of the new main data obtained at the step of the addition by tempo information,
a step of reproducing the main data repeatedly the number of repetition times of the main data and then reproducing the extra portion of the main data from the head of the main data, the connecting data and the ending data sequentially,
a step of calculating the total number of performance bars by multiplying tempo information to the predetermined time if, on the other hand, the total reproduction time of the main data and the ending data is not equal to or less than the predetermined time at the judging step,
a step of calculating the number of bars of the ending data by multiplying tempo information to the reproduction time of the ending data,
a step of calculating the number of bars of the connecting data by multiplying tempo information to the reproduction time of the connecting data,
a step of calculating the number of bars of the main data by subtracting the number of bars of the ending data and the number of bars of the connecting data from the total number of performance bars, and
a step of calculating the reproduction time of the main data by dividing the number of bars of the main data by tempo information, reproducing the main data from the head thereof only during the reproduction time of the main data, and then reproducing the connecting data and the ending data sequentially. The music composition data reproducing method according to the 11th aspect of the present invention having the above-mentioned steps can easily add user's favorite music composition so as to carry out alignment at the start point and the end point of the video/audio data, and can add the music composition data selected by the user as BGM so as to be aligned with the video/audio data without arousing any uncomfortable feeling.

A music composition data reproducing method according to a 12th aspect of the present invention is a method for reproducing the music composition data recorded using the music composition data recording method according to the eighth aspect during a predetermined time, comprising:
a judging step of judging whether the total of the reproduction times of the introduction data, the main data and the ending data of the music composition data is equal to or less than the predetermined time,
a step of calculating the total number of performance bars by multiplying tempo information to the predetermined time if the total reproduction time of the introduction data, the main data and the ending data is equal to or less than the predetermined time,
a step of calculating the number of bars of the main data by multiplying tempo information to the reproduction time of the main data,
a step of calculating the number of bars of the introduction data by multiplying tempo information to the reproduction time of the introduction data,
a step of calculating the number of bars of the ending data by multiplying tempo information to the reproduction time of the ending data,
a step of calculating the number of bars of the connecting data by multiplying tempo information to the reproduction time of the connecting data,
a step of calculating the number of repetition times of the main data by subtracting the number of bars of the introduction data and the number of bars of the ending data from the total number of performance bars and by dividing the result of the subtraction by the number of bars of the main data, and calculating the number of extra bars of the main data as the remainder of the division,
a step of subtracting the number of bars of the connecting data from the number of extra bars of the main data and subtracting one from the number of repetition times of the main data if the result of the subtraction is negative, and adding the number of bars of the main data to the number of extra bars of the main data,
a step of calculating the reproduction time of the extra portion of the main data by dividing the number of extra bars of the new main data obtained at the step of the addition by tempo information,
a step of reproducing the introduction data, and reproducing the main data repeatedly the number of repetition times of the main data and then reproducing the extra portion of the main data from the head of the main data, the connecting data and the ending data sequentially,
a step of calculating the total number of performance bars by multiplying tempo information to the predetermined time if, on the other hand, the total reproduction time of the introduction data, the main data and the ending data is not equal to or less than the predetermined time at the judging step,
a step of calculating the number of bars of the introduction data by multiplying tempo information to the reproduction time of the introduction data,
a step of calculating the number of bars of the ending data by multiplying tempo information to the reproduction time of the ending data,
a step of calculating the number of bars of the connecting data by multiplying tempo information to the reproduction time of the connecting data,
a step of calculating the number of bars of the main data by subtracting the number of bars of the introduction data, the number of bars of the ending data and the number of bars of the connecting data from the total number of performance bars, and
a step of calculating the reproduction time of the main data by dividing the number of bars of the main data by tempo information, reproducing the introduction data, and reproducing the main data from the head thereof only during the calculated reproduction time of the main data, and then reproducing the connecting data and the ending data sequentially. The music composition data reproducing method according to the 12th aspect of the present invention having the above-mentioned steps can easily add user's favorite music composition so as to carry out alignment at the start point and the end point of the video/audio data, and can add the music composition data selected by the user as BGM so as to be aligned with the video/audio data without arousing any uncomfortable feeling.

A music composition data recording medium according to a 13th aspect of the present invention is characterized in that at least the ending portion of music composition data is recorded as ending data, that the main portion of the music composition data is recorded as main data, that unit data, the code information of which is dominant, or unit data changing from subdominant to "dominant is recorded as connecting data, and that the tempo information of the music composition data is recorded. By the use of the music composition data recording medium according to the 13th aspect of the present invention in which recording is carried out as described above, it is possible to easily add user's favorite music composition so as to be aligned with the video/audio data.

A music composition data recording medium according to a 14th aspect of the present invention is characterized in that the introduction portion of the music composition data according to the 13th aspect is recorded as introduction data, and that the music composition data comprises the introduction data, the main data, the ending data, the connecting data and the tempo data. By the use of the music composition data recording medium according to the 14th aspect of the present invention in which recording is carried out as described above, it is possible to add the music composition data selected by the user as BGM so as to be aligned with the video/audio data without arousing any uncomfortable feeling.

A music composition data reproducing program according to a 15th aspect of the present invention is a program for reproducing the music composition data recorded using the music composition data recording method according to the seventh aspect during a predetermined time, comprising:
a judging procedure of judging whether the total of the reproduction times of the main data and the ending data of the music composition data is equal to or less than the predetermined time,
a procedure of calculating the total number of performance bars by multiplying tempo information to the predetermined time if the total reproduction time of the main data and the ending data is equal to or less than the predetermined time in the judging procedure,
a procedure of calculating the number of bars of the main data by multiplying tempo information to the reproduction time of the main data,
a procedure of calculating the number of bars of the ending data by multiplying tempo information to the reproduction time of the ending data,
a procedure of calculating the number of bars of the connecting data by multiplying tempo information to the reproduction time of the connecting data,
a procedure of calculating the number of repetition times of the main data by subtracting the number of bars of the ending data from the total number of performance bars and by dividing the result of the subtraction by the number of bars of the main data, and calculating the number of extra bars of the main data as the remainder of the division,
a procedure of subtracting the number of bars of the connecting data from the number of extra bars of the main data and subtracting one from the number of repetition times of the main data if the result of the subtraction is negative, and adding the number of bars of the main data to the number of extra bars of the main data,
a procedure of calculating the reproduction time of the extra portion of the main data by dividing the number of extra bars of the new main data obtained in the procedure of the addition by tempo information,
a procedure of reproducing the main data repeatedly the number of repetition times of the main data and then reproducing the extra portion of the main data from the head of the main data, the connecting data and the ending data sequentially,
a procedure of calculating the total number of performance bars by multiplying tempo information to the predetermined time if, on the other hand, the total reproduction time of the main data and the ending data is not equal to or less than the predetermined time in the judging procedure,
a procedure of calculating the number of bars of the ending data by multiplying tempo information to the reproduction time of the ending data,
a procedure of calculating the number of bars of the connecting data by multiplying tempo information to the reproduction time of the connecting data,
a procedure of calculating the number of bars of the main data by subtracting the number of bars of the ending data and the number of bars of the connecting data from the total number of performance bars, and
a procedure of calculating the reproduction time of the main data by dividing the number of bars of the main data by tempo information, reproducing the main data from the head thereof only during the reproduction time of the main data, and then reproducing the connecting data and the ending data sequentially. The music composition data reproducing program according to the 15th aspect of the present invention having the above-mentioned procedures can easily add user's favorite music composition so as to carry out alignment at the start point and the end point of the video/audio data, and can add the music composition data selected by the user as BGM so as to be aligned with the video/audio data without arousing any uncomfortable feeling.

A music composition data reproducing program according to a 16th aspect of the present invention is a program for reproducing the music composition data recorded using the music composition data recording method according to the eighth aspect during a predetermined time, comprising:
a judging procedure of judging whether the total of the reproduction times of the introduction data, the main data and the ending data of the music composition data is equal to or less than the predetermined time,
a procedure of calculating the total number of bars by multiplying tempo information to the predetermined time if the total reproduction time of the introduction data, the main data and the ending data is equal to or less than the predetermined time in the judging procedure,
a procedure of calculating the number of bars of the main data by multiplying tempo information to the reproduction time of the main data,
a procedure of calculating the number of bars of the introduction data by multiplying tempo information to the reproduction time of the introduction data,
a procedure of calculating the number of bars of the ending data by multiplying tempo information to the reproduction time of the ending data,
a procedure of calculating the number of bars of the connecting data by multiplying tempo information to the reproduction time of the connecting data,
a procedure of calculating the number of repetition times of the main data by subtracting the number of bars of the introduction data, the number of bars of the ending data from the total number of performance bars and by dividing the result of the subtraction by the number of bars of the main data, and calculating the number of extra bars of the main data as the remainder of the division,
a procedure of subtracting the number of bars of the connecting data from the number of extra bars of the main data and subtracting one from the number of repetition times of the main data if the result of the subtraction is negative, and adding the number of bars of the main data to the number of extra bars of the main data,
a procedure of calculating the reproduction time of the extra portion of the main data by dividing the number of extra bars of the new main data obtained in the addition procedure by tempo information,
a procedure of reproducing the introduction data, and reproducing the main data repeatedly the number of repetition times of the main data and then reproducing the extra portion of the main data from the head of the main data, the connecting data and the ending data sequentially,
a procedure of calculating the total number of performance bars by multiplying tempo information to the predetermined time if, on the other hand, the total reproduction time of the introduction data, the main data and the ending data is not equal to or less than the predetermined time in the judging procedure,
a procedure of calculating the number of bars of the introduction data by multiplying tempo information to the reproduction time of the introduction data,
a procedure of calculating the number of bars of the ending data by multiplying tempo information to the reproduction time of the ending data,
a procedure of calculating the number of bars of the connecting data by multiplying tempo information to the reproduction time of the connecting data,
a procedure of calculating the number of bars of the main data by subtracting the number of bars of the introduction data, the number of bars of the ending data and the number of bars of the connecting data from the total number of performance bars, and
a procedure of calculating the reproduction time of the main data by dividing the number of bars of the main data by tempo information, reproducing the introduction data, and reproducing the main data from the head thereof only during the calculated reproduction time of the main data, and then reproducing the connecting data and the ending data sequentially. The music composition data reproducing program according to the 16th aspect of the present invention having the above-mentioned procedures can easily add user's favorite music composition so as to carry out alignment at the start point and the end point of the video/audio data, and can add the music composition data selected by the user as BGM so as to be aligned with the video/audio data without arousing any uncomfortable feeling.

A recording medium according to a 17th aspect of the present invention is a medium in which the music composition data reproducing program according to the 15th aspect of the present invention is recorded. For this reason, by the use of the recording medium according to the 17th aspect of the present invention, it is possible to easily add user's favorite music composition so as to carry out alignment at the start point and the end point of the video/audio data.
A recording medium according to an 18th aspect of the present invention is a medium in which the music composition data reproducing program according to the 16th aspect of the present invention is recorded. For this reason, by the use of the recording medium according to the 18th aspect of the present invention, it is possible to add the music composition data selected by the user as BGM so as to be aligned with the video/audio data without arousing any uncomfortable feeling.
While the novel features of the invention are set forth particularly in the appended claims, the invention, both as to organization and content, will be better understood and appreciated, along with other objects and features thereof, from the following detailed description taken in conjunction with the drawings.

### EFFECT OF THE INVENTION

With the present invention, a music composition is divided into main data, ending data, etc. in the time-axis direction, the divided data is recorded as music composition data, and the music composition data is used so as to be aligned with video/audio data, whereby the music composition can be reproduced during a desired reproduction time without arousing any uncomfortable feeling.
With the present invention, a desired music composition is edited so as to be reproduced in synchronization with the start point and the end point of video/audio data formed by editing video/audio data obtained by carrying out photographing by the user, whereby editing can be carried out so that each music composition is heard without arousing any uncomfortable feeling at the switching point of the continued video/audio data.

### BRIEF DESCRIPTION OF THE DRAWINGS

FIG. 1 is a block diagram showing the configuration of a music composition data editing device according to Embodiment 1 of the present invention;
FIG. 2 is a schematic view showing an example of original music composition data that is not yet stored in the music composition data memory unit of the music composition data editing device according to Embodiment 1;
FIG. 3 is a view conceptually showing multiple pieces of BGM data stored in the music composition data memory unit of the music composition data editing device according to Embodiment 1;
FIG. 4 is a conceptual view showing the deposition state of original music composition data in a music composition data editing method according to Embodiment 1;
FIG. 5 is a flowchart showing the music composition data editing method according to Embodiment 1;
FIG. 6 is a schematic view showing an example of original music composition data that is not yet stored in the music composition data memory unit of the music composition data editing device according to Embodiment 2;
FIG. 7 is a view conceptually showing multiple pieces of BGM data stored in the music composition data memory unit of the music composition data editing device according to Embodiment 2;
FIG. 8 is a conceptual view showing the deposition state of original music composition data in a music composition data editing method according to Embodiment 2; and
FIG. 9 is a flowchart showing the music composition data editing method according to Embodiment 2.

### EXPLANATIONS OF NUMERALS

- 1: video/audio data input unit
- 2: video/audio data output unit
- 3: editing unit
- 4: audio data mixture unit
- 5: video/audio data synthesis unit
- 6: synthesized data memory unit
- 7: controller
- 8: operation unit
- 9: display unit
- 10: video/audio data memory unit
- 11: video/audio data separation unit
- 12: video data signal processing unit
- 13: audio data signal processing unit
- 14: video data output unit
- 15: audio switching unit
- 16: audio data output unit
- 17: music composition data memory unit
- 18: music composition data editing unit

### BEST MODES FOR CARRYING OUT THE INVENTION

Preferable music composition data editing devices and music composition data editing methods according to the present invention will be described below referring to the accompanying drawings.

### EMBODIMENT 1

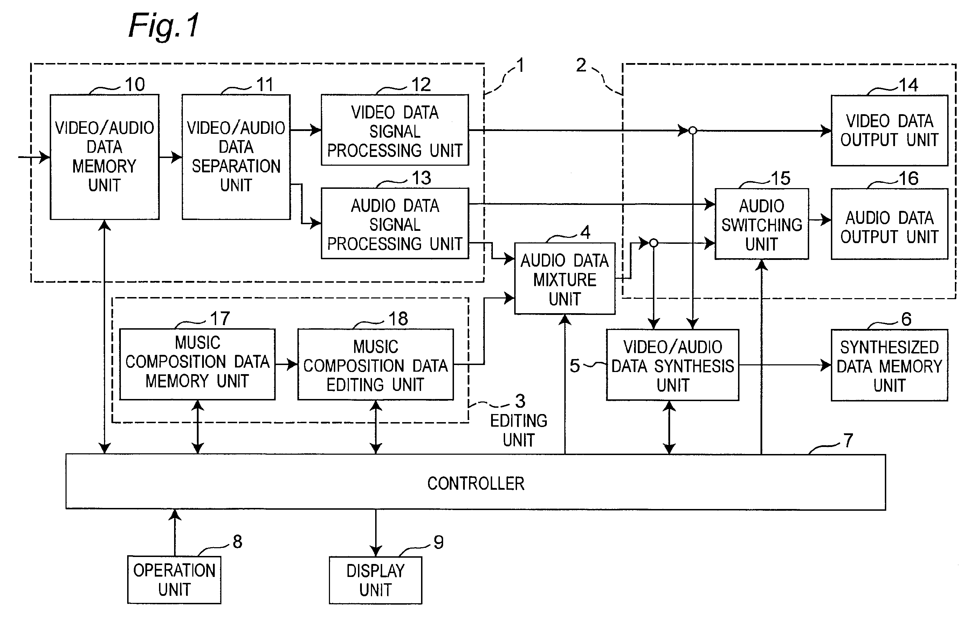

FIG. 1 is a block diagram showing the configuration of a music composition data editing device according to Embodiment 1 of the present invention. To the music composition data editing device according to Embodiment 1, video/audio data obtained by editing video/audio data obtained by carrying out photographing using a digital video camera or the like so as to have a desired time-axis length is input. The music composition data editing device according to Embodiment 1 is a device that edits a music composition selected by the user as BGM (background music) so as to have an appropriate time-axis length with respect to the input video/audio data and adds the music composition to the video/audio data.

As shown in FIG. 1, the music composition data editing device according to Embodiment 1 comprises a video/audio data input unit 1 that receives video/audio data, the reproduction time of which is processed by the user so as to have a desired time; a video/audio data output unit 2 that divides the video/audio data into video data and audio data and outputs the data; an editing unit 3 that stores multiple pieces of music composition data preprocessed so as to be editable as BGM data and edits them to obtain BGM data having a desired time-axis length; audio data mixture unit 4 that mixes the audio data output from the video/audio data input unit 1 and the edited BGM data; a video/audio data synthesis unit 5 that synthesizes the mixed audio data and video data; and a synthesized data memory unit 6 that stores video/audio data synthesized using the video/audio data synthesis unit 5. The video/audio data input unit 1, the video/audio data output unit 2, the editing unit 3, the audio data mixture unit 4 for carrying out mixture, the video/audio data synthesis unit 5 and the synthesized data memory unit 6 are controlled using a controller 7. Furthermore, the music composition data editing device according to Embodiment 1 is provided with an operation unit 8 through which the user sets various conditions and designates music compositions, and a display unit 9 that displays the edited video/audio data.

The video/audio data input unit 1 comprises a video/audio data memory unit 10, a video/audio data separation unit 11, a video data signal processing unit 12, and an audio data signal processing unit 13. Video/audio data processed by the user so as to have a desired length, video/audio data obtained from the outside, etc. are input to and stored in the video/audio data memory unit 10. The reproduction time serving as the information on the time-axis length of the video/audio data is read using the controller 7. The video/audio data separation unit 11 separates the input video/audio data into a video data signal and an audio data signal, and transmits the signals to the video data signal processing unit 12 and the audio data signal processing unit 13, respectively.

The editing unit 3 comprises a music composition data memory unit 17 and a music composition data editing unit 18. In the music composition data memory unit 17, multiple kinds of music composition data are stored as BGM data. The BGM data is herein not music composition data unprocessed, such as classical music or popular songs, but music composition data preprocessed and recorded so as to be editable as BGM data. The music composition data editing unit 18 edits the BGM data selected by the user according to the time-axis length (reproduction time) of the video/audio data stored in the video/audio data input unit 1, and outputs the edited BGM data to the audio data mixture unit 4. In the audio data mixture unit 4, the original audio data, that is, the sound obtained during photographing and included in the video/audio data stored in the video/audio data input unit 1, is mixed with the edited BGM data. In the audio data mixture unit 4, the ratio between the sound volume of the original audio data and the sound volume of the BGM data in the edited audio data is adjusted on the basis of commands from the controller 7.

The edited audio data output from the audio data mixture unit 4 is output from the audio data output unit 16 via an audio switching unit 15. Furthermore, the edited audio data output from the audio data mixture unit 4 is input to the video/audio data synthesis unit 5 together with the video data signal output from the video data signal processing unit 12, and they are synthesized, and then edited video/audio data is formed. The edited video/audio data is configured so as to be displayed on the display unit 9 using commands from the controller 7. The video/audio data synthesis unit 5 stores the edited video/audio data into the synthesized data memory unit 6.

In the video/audio data output unit 2, the video data signal from the video data signal processing unit 12 is output from a video data output unit 14 as video data without change. Hence, in the case that the audio data from the audio data mixture unit 4 is selected using the audio switching unit 15, the video data output from the video data output unit 14 and the audio data output from the audio data output unit 16 become a piece of video/audio data having BGM, being synchronized so as to be the same at the start point and the end point.

Next, BGM data serving as multiple pieces of music composition data stored in the music composition data memory unit 17 will be described.
The BGM data stored in the music composition data memory unit 17 is not various kinds of music composition data unprocessed but music composition data being editable as BGM data. The music composition data stored in the music composition data memory unit 17 is various kinds of music composition data prerecorded using a method described later.
In the case that various kinds of video/audio data obtained by carrying out photographing using a digital video camera or the like are connected and edited, the time-axis lengths of the respective video/audio data are different. In the case that BGM is desired to be added to each piece of such video/audio data, if the BGM is simply added to each piece of video/audio data or to each piece of all the data connected, the music composition changes abruptly at the data switching point, and there is a danger that the music composition is heard unnaturally. Furthermore, in the case that the BGM is desired to be added to all pieces of data, a similar problem occurs at the end thereof. In the music composition data editing device according to Embodiment 1, in order that a music composition is not heard unnaturally at the switching points of the video/audio data and at the end of all the data, the BGM data stored in the music composition data memory unit 17 is preprocessed so that editing can be carried out to adjust the length of the BGM data and to eliminate the unnaturalness at the switching points and the end portion in the editing unit 3.

Generally, in the case that the user selects a desired music composition and uses it as BGM, when the time-axis length of the video/audio data to which the BGM should be added is longer than the time-axis length of the selected music composition, the selected music composition is reproduced repeatedly, and the reproduction is carried out so that the time-axis length is aligned with the time-axis length (reproduction time) of the video/audio data. On the other hand, when the length of the video/audio data to which BGM should be added is shorter than that of the selected music composition, the reproduction of the selected music composition is stopped in the middle so that the length is aligned with the time-axis length (reproduction time) of the video/audio data. In the case that a desired music composition is used as BGM using the editing method described above, it is highly possible that the music composition is heard unnaturally at the switching points of the video/audio data, and there is a problem that the value of the BGM as a music composition is lowered. Furthermore, in the case that the tempo of the music composition is changed to align the length with the time-axis length of the video/audio data to which BGM should be added, the music composition is not played in the state of the original music composition selected by the user; hence, there is a problem that the image of the music composition of the BGM is different from that visualized by the user.

In each music composition, an ending portion is formed at its end portion. Generally, the ending portion indicates the end of the music composition, and is used to smooth the flow to the next music composition. Hence, in the case that a music composition is used as BGM, when the length of the video/audio data to which BGM should be added is longer than that of the selected music composition, the main portion other than the ending portion of the music composition is played repeatedly, and the ending portion is disposed in the end, whereby the length can be aligned with the time-axis length of the video/audio data. On the other hand, when the time-axis length of the video/audio data to which BGM should be added is shorter than that of the selected music composition, the ending portion is started in the middle of the main portion of the music composition, whereby the length can be aligned with the time-axis length of the video/audio data. However, in the case that this kind of editing is carried out, an uncomfortable feeling is aroused in the music composition when the music composition is shifted from the main portion to the ending portion.

In the music composition data editing device according to Embodiment 1, editing is carried out so that connecting data (described later) serving as a preprocessed and recorded connecting portion is disposed at the position where the music composition is shifted from the main portion to the ending portion. With this deposition of the connecting data, even in the case of BGM, the length of which is aligned with the time-axis length of each piece of video/audio data, the music composition can be heard without arousing any uncomfortable feeling, and the music composition of BGM can be finished just like an image visualized by the user.

Next, the connecting data that serves as the connecting portion of a music composition and is used in the music composition data editing device according to Embodiment 1 will be described.
Correct harmony is not formed even if chords having various scale degrees are arranged randomly. As sentences are formed according to a word arranging method, chords are also formed according to an arranging method. As a "sentence" is formed by connecting some words, a cadence serving as a "sentence in chords" is formed by connecting some chords. One sentence is functionally formed of three kinds of words, a "subject," a "predicate" and a "complement." Similarly, one cadence is formed of three kinds of chord functions, a "tonic," a "dominant" and a "subdominant." When the components constituting a cadence are viewed with respect to function, any of the chords corresponds to either one of the above-mentioned three kinds of chord functions. In addition, the arrangement of the chords in a cadence is constant at all times with respect to the functional relationship. Hence, all cadences can be classified into the following three types.

(1) First type of cadence: "tonic" → "dominant" → "tonic"
(2) Second type of cadence: "tonic" → "subdominant" → "dominant" → "tonic"
(3) Third type of cadence: "tonic" → "subdominant" → "tonic"
In a music composition, a chord progression composed of G, C, Am, F and the like is used. The chords are classified into "tonic," "dominant" and "subdominant" in musicology as described above. In a music composition, a chord progression, not heard unnaturally, is unit data being "dominant" or unit data changing from "subdominant" to "dominant." Hence, as a connecting portion that is disposed at the position where the music composition is shifted from the main portion to the ending portion, unit data being "dominant" or unit data changing from "subdominant" to "dominant" as described above is selected from the music composition concerned. The unit data selected as described above is connecting data that is disposed at the position where the music composition is shifted from the main portion to the ending portion.

The ending data serving as the ending portion of a music composition begins from "tonic." Hence, as connecting data serving as a connecting portion, unit data being "dominant" or unit data changing from "subdominant" to "dominant" as described above is selected, whereby the flow changes from "dominant" to "tonic" at the joint from the connecting data to the ending data, and no uncomfortable feeling is aroused.

In addition, at the joint from the main data serving as the main portion of a music composition to the connecting data serving as the connecting portion, data shifting occurs such that the unit data changes from "tonic," "dominant" or "subdominant" to "dominant" or the unit data changes from "subdominant" to "dominant;" in either case, a flow not arousing any substantially uncomfortable feeling is obtained. However, in the case that the end of the main data serving as the main portion is "dominant," it is preferable that unit data being "dominant" should be selected as connecting data. This is because, in the case that unit data changing from "subdominant" to "dominant" is selected as connecting data, a flow from "dominant" to "subdominant" is produced for a short time, and a slightly unnatural feeling remains. However, even in this case, "subdominant" is immediately changed to "dominant" in the connecting data, and then connected to "tonic" of the ending data; hence, no uncomfortable feeling is aroused substantially.

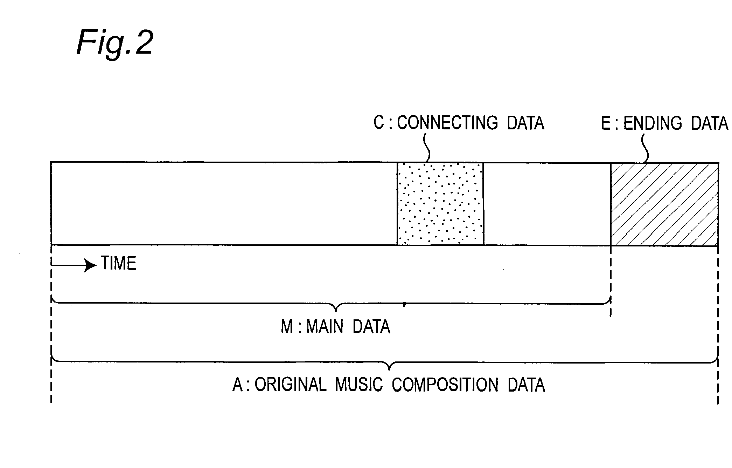

FIG. 2 schematically shows an example of original music composition data that is not yet stored in the music composition data memory unit 17 as original music composition data A. In FIG. 2, main data M serving as the main portion of the original music composition data A, connecting data C serving as the connecting portion selected using the above-mentioned method, and ending data E serving as the ending portion are shown. In the music composition data editing device according to Embodiment 1, the main data M, the ending data E and the connecting data C, obtained from the original music composition data A by division and extraction in the time-axis direction, are stored in the music composition data memory unit 17 as the division data of BGM data being editable as BGM. As the connecting data C, preferable unit data may be newly formed beforehand, without being selected from the music composition.

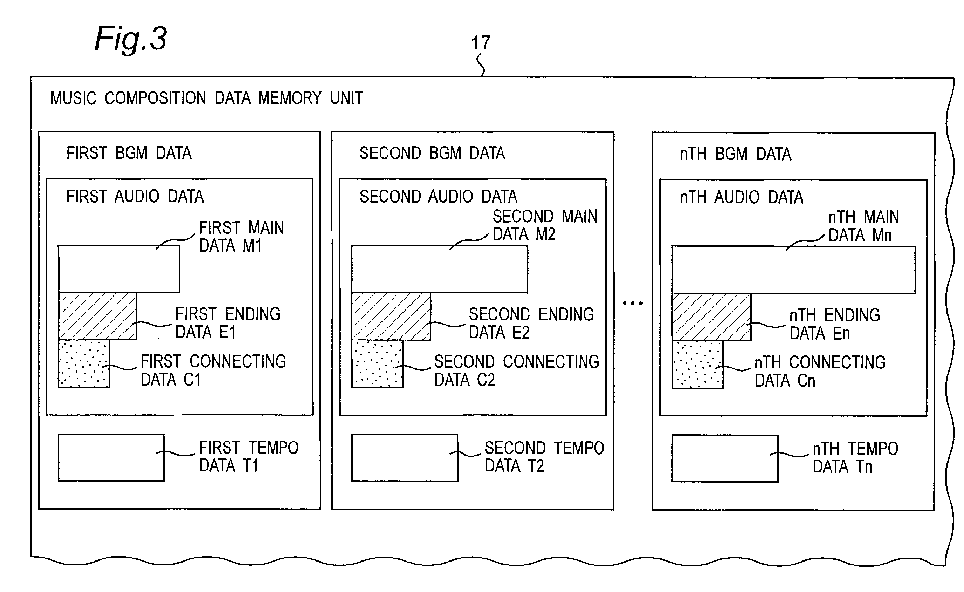

In the music composition data memory unit 17, BGM data serving as multiple pieces of music composition data extracted as described above is stored. FIG. 3 is a view conceptually showing multiple pieces of BGM data stored in the music composition data memory unit 17. In FIG. 3, first BGM data includes first audio data and first tempo data T1, and the first audio data comprises first main data M1, first ending data E1 and first connecting data C1. In the first tempo data T1, tempo information indicating the tempo (speed) of a music composition is recorded. The tempo information is herein the number of bars per unit time. As described above, multiple pieces of preprocessed BGM data are stored in the music composition data memory unit 17. The BGM data stored in the music composition data memory unit 17 is data preprocessed and stored in a recording medium, such as an optical disc or a semiconductor memory card, and read and stored in the music composition data memory unit 17 of the editing unit 3 of the music composition data editing device according to Embodiment 1. Or, the music composition data memory unit 17 itself may be the external memory (recording medium) of the music composition data editing device according to Embodiment 1.

The music composition data editing unit 18 of the editing unit 3 edits BGM data selected from multiple pieces of the BGM data stored in the music composition data memory unit 17 according to the time-axis length serving as the reproduction time of the video/audio data input to the video/audio data input unit 1. The music composition data editing unit 18 receives information on the reproduction time of the input video/audio data from the controller 7, and calculates the reproduction time of the main data M of the BGM data selected according to the information. On the basis of the result of the calculation, the BGM data is edited so that the main data M is reproduced and then the connecting data C and the ending data E are reproduced. In the audio data mixture unit 4, the edited BGM data is mixed with the audio data of the video/audio data input to the video/audio data input unit 1, whereby edited audio data is formed.

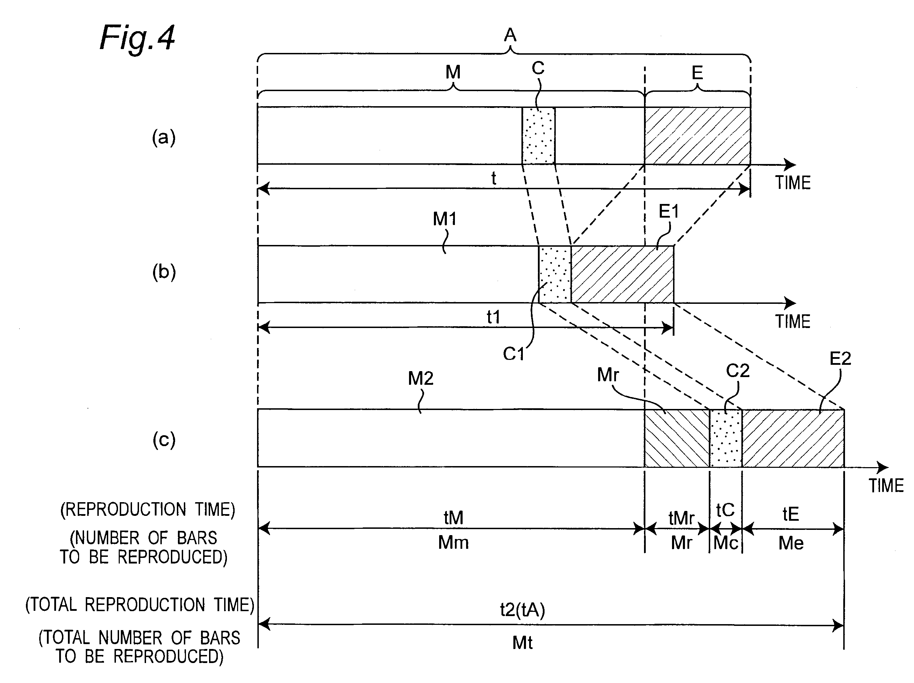

FIG. 4 is a conceptual view showing how the main data M, the connecting data C and the ending data E of the original music composition data A are disposed in the edited BGM data. A portion (a) of FIG. 4 shows an example of the original music composition data A; in this example, a predetermined bar in the middle portion of the main data M is divided in the time-axis direction and extracted as the connecting data C. A portion (b) of FIG. 4 shows first BGM data (t1 < t), the length of which is shorter than the time-axis length (time = t) of the original music composition data A, and a portion (c) of FIG. 4 shows second BGM data (t2 > t), the length of which is longer than the time-axis length (time = t) of the original music composition data A. As shown in FIG. 4, in either case, the connecting data C is reproduced after the main data M is reproduced for a predetermined time, and then the ending data E is reproduced.

Next, a calculation method will be described in which BGM data selected by the user is added to the video/audio data that is input to the video/audio data memory unit 10 and should be edited so that synchronization is established at the start point and the end point.

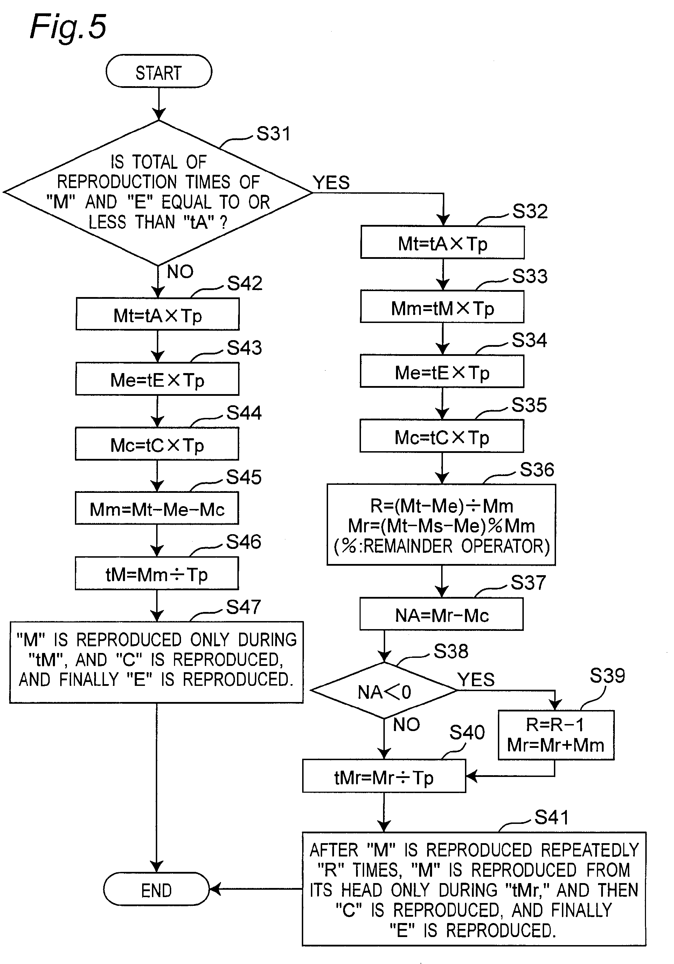

FIG. 5 is a flowchart showing the method of adding the selected BGM data to the video/audio data that should be edited so that synchronization is established at the start point and the end point.

In the music composition data editing device according to Embodiment 1, in the case that any one piece of the BGM data stored in the music composition data memory unit 17 is selected, the selected BGM data is edited so that its length corresponds to the reproduction time determined according to the time-axis length of the video/audio data; the basic idea of this editing is described below.
For the purpose of reproducing the BGM data selected by the user during a predetermined time corresponding to the video/audio data, editing is carried out so that the main data M is reproduced repeatedly zero times or more during the time obtained by subtracting the respective times of the connecting data C and the ending data E from the predetermined time, and so that the main data M is reproduced in bar unit during the extra time. In the edited BGM data, after the main data M is reproduced, the connecting data C and the ending data E are reproduced sequentially. Hence, it is necessary to calculate how many bars of the main data M are reproduced.

The method for reproducing the selected BGM data so that its length is aligned with the time-axis length (total reproduction time) of the video/audio data that is input so as to be edited will be described using the flowchart shown in FIG. 5. In FIG. 5, tA represents the total reproduction time of the video/audio data that should be edited. tM represents the reproduction time of the main data M of the selected BGM data. tMr represents the reproduction time of the main data M during the extra time in the total reproduction time of the video/audio data that should be edited. tC represents the reproduction time of the connecting data C. tE represents the reproduction time of the ending data E. Furthermore, Tp represents the tempo of tempo information T. The tempo Tp is herein the number of bars per unit time. Mt represents the number of all the bars to be reproduced during the total reproduction time of the video/audio data that should be edited. Mm represents the number of bars to be reproduced in the main data M. Mc represents the number of bars to be reproduced in the connecting data C. Me represents the number of bars to be reproduced in the ending data. Mr represents the number of bars to be reproduced in the main data M during the extra time in the total reproduction time of the video/audio data that should be edited. R represents the number of times the reproduction of the main data M is repeated during the total reproduction time of the video/audio data that should be edited.

At step S31 shown in FIG. 5, a judgment is made as to whether the total (tM + tE) of the reproduction times of the main data M and the ending data E in the selected BGM data is equal to or less than the total reproduction time tA of the video/audio data that is input so as to be edited. If the total time (tM + tE) is equal to or less than the total reproduction time tA, the tempo Tp is multiplied to the total reproduction time tA at step S32, whereby the total number of bars Mt is calculated.
Next, at step S33, the tempo Tp is multiplied to the reproduction time tM of the main data M, whereby the number of bars Mm in which the main data M is reproduced is calculated. At step S34, the tempo Tp is multiplied to the reproduction time tE of the ending data E, whereby the number of bars Me in which the ending data E is reproduced is calculated. Furthermore, at step S35, the tempo Tp is multiplied to the reproduction time tC of the connecting data C, whereby the number of bars Mc in which the connecting data C is reproduced is calculated.

Next, at step S36, the number of bars Me of the ending data E is subtracted from the total number of bars Mt, and the result of the calculation is divided by the number of bars of the main data M, whereby the number of repetition times R of the main data M is calculated. The remainder of the division is the number of extra bars Mr in which the main data M is reproduced.
At step S37, the number of bars Mc of the connecting data C is subtracted from the number of extra bars Mr, and a judgment value NA is obtained. This judgment value NA is a value depending on which a judgment is made as to whether the connecting data C is reproduced in the number of extra bars Mr calculated. At step S38, a judgment is made as to whether the judgment value NA obtained at step S37 is positive or negative. If the judgment value NA is negative, the number of repetition times R of the main data M is decreased by 1, and the number of bars Mm of the main data M is added to the number of extra bars Mr at step S39.

In the case that the judgment value NA is not negative at step S38, after the operation at step S39, the number of extra bars Mr is divided by the tempo Tp at step S40. As a result, after the main data M is reproduced to the end, the extra time tMr in which the main data M is reproduced repeatedly is calculated.
At step S41, after the main data M of the selected BGM data is reproduced repeatedly only the number of repetition times R, the main data M is reproduced from its head only during the extra time tMr, and then the connecting data C and the ending data E are reproduced sequentially. With this reproduction, the selected BGM data is edited and reproduced according to the time-axis length (the total reproduction time) of the video/audio data that is input so as to be edited.
Because step S41 is a step at which the BGM data selected by the user is reproduced on the basis of the reproduction time calculated for each piece of data, if it is desired that only the calculation result of the reproduction time of each piece of data is obtained, step S41 is not necessary.

On the other hand, if the total (tM + tE) of the reproduction times of the main data M and the ending data E in the selected BGM data is not equal to or less than the total reproduction time tA at step S31, the tempo Tp is multiplied to the total reproduction time tA at step S42, whereby the total number of bars Mt is calculated. Furthermore, at step S43, the tempo Tp is multiplied to the reproduction time tE of the ending data E, whereby the number of bars Me in which the ending data E is reproduced is calculated. Next, at step S44, the tempo Tp is multiplied to the reproduction time tC of the connecting data C, whereby the number of bars Mc in which the connecting data C is reproduced is calculated.

At step S45, the number of bars Me of the ending data E and the number of bars Mc of the connecting data C are subtracted from the total number of bars Mt, whereby the number of bars Mm in which the main data M is reproduced is calculated. At step S46, the number of bars Mm in which the main data M is reproduced is divided by the tempo Tp, whereby the time tM in which the main data M is reproduced is calculated.
At step S47, after the main data M of the selected BGM data is reproduced only during the time tM calculated at step S46, the connecting data C and the ending data E are reproduced sequentially. With this reproduction, the selected BGM data is edited and reproduced accurately according to the time-axis length (the total reproduction time) of the video/audio data that is input so as to be edited. Like step 41, step S47 is a step at which the BGM data selected by the user is reproduced on the basis of the reproduction time calculated for each piece of data; hence, if it is desired that only the calculation result of the reproduction time of each piece of data is obtained, step S47 is not necessary.

Although the operations at step 41 and step 47 can be processed using the music composition data editing unit 18, it is possible that the edited BGM data is transmitted to the video/audio data synthesis unit 5 via the audio data mixture unit 4, that the video data is synchronized with the edited BGM data, and that the user makes confirmation on the display unit 9.
As shown in FIG. 5, the program for reproducing music composition data according to the present invention is a program derived from the method for editing the BGM data selected by the user and for reproducing the edited BGM data, and the recording medium in which this program is recorded is a recording medium in which the program for reproducing music composition data according to the present invention is recorded.

The music composition data reproducing method in the music composition data editing method according to Embodiment 1 of the present invention is configured that, first, the main data M of the BGM data is reproduced beginning from its head only during a predetermined time, and then the connecting data C is reproduced. In the music composition data recording method in the music composition data editing method according to Embodiment 1 of the present invention, because either of unit data, the code information of which is "dominant," or unit data changing from "subdominant" to "dominant" is used as the connecting data C, no sound is heard unnaturally at the point of switching from the main data M to the connecting data C, regardless of whether the code of the last bar of the main data M at the position of switching from the main data M to the connecting data C is "tonic," "subdominant" or "dominant."

Furthermore, in the music composition data reproducing method in the music composition data editing method according to Embodiment 1 of the present invention, the position at which switching is carried out from the middle of the main data M to the connecting data C is calculated on the basis of the number of bars, as made clear at step 40 and step 47 shown in FIG. 5, switching is not carried out in the middle of bar. Hence, musical connection does not become unnatural at the point where switching is carried out from the main data M to the connecting data C.

In the music composition data recording method in the music composition data editing method according to Embodiment 1 of the present invention, the original music composition data of digital audio data is divided in the time-axis direction, whereby the main data M, the ending data E and the connecting data C are formed and recorded in a recording medium. Hence, the data recorded using the music composition data reproducing method according to Embodiment 1 of the present invention can be reproduced while having a difference from the predetermined reproduction time by less than one bar.

### EMBODIMENT 2

A music composition data editing device and a music composition data editing method according to Embodiment 2 of the present invention will be described below. This music composition data editing method includes a music composition data recording method and a music composition data reproducing method.
The configuration of the music composition data editing device according to Embodiment 2 of the present invention is the same as the configuration of the music composition data editing device according to Embodiment 1 shown in FIG. 1 described above. Embodiment 2 differs from Embodiment 1 in the music composition data editing method, and is different in the music composition data recording method and the music composition data reproducing method. Also in the music composition data editing device according to Embodiment 2, video/audio data obtained by editing video/audio data obtained by carrying out photographing using a digital video camera or the like so as to have a desired time-axis length is input, and a music composition selected by the user is edited as BGM (background music) so as to have an appropriate time-axis length with respect to the video/audio data and added to the video/audio data. Hence, in the description of Embodiment 2, the components having the same functions and configurations as those of the components in the music composition data editing device according to Embodiment 1 are designated by the same numerals, and the descriptions in Embodiment 1 are applied to their descriptions.

As in the music composition data editing device according to Embodiment 1 shown in FIG. 1, in the music composition data editing device according to Embodiment 2, the video/audio data input unit 1 comprises a video/audio data memory unit 10, a video/audio data separation unit 11, a video data signal processing unit 12, and an audio data signal processing unit 13. In the video/audio data memory unit 10, the video/audio data edited by the user so as to have a desired time-axis length is input. This video/audio data is stored in the video/audio data memory unit 10, and the information on the time-axis length of the video/audio data is transmitted to the controller 7. The video/audio data separation unit 11 separates the input video/audio data into a video data signal and an original audio data signal, and transmits the signals to the video data signal processing unit 12 and the audio data signal processing unit 13, respectively.

The editing unit 3 comprises a music composition data memory unit 17, and a music composition data editing unit 18. In the music composition data memory unit 17, BGM data serving as multiple kinds of music composition data is stored. The music composition data editing unit 18 edits the BGM data selected by the user according to the time-axis length of the video/audio data stored in the video/audio data input unit 1, and outputs the edited BGM data to the audio data mixture unit 4. In the audio data mixture unit 4, the original audio data, that is, the sound obtained during photographing and included in the video/audio data input to the video/audio data input unit 1, is mixed with the edited BGM data.

In the music composition data editing device according to Embodiment 2, BGM data serving as multiple pieces of music composition data stored in the music composition data memory unit 17 will be described.
The BGM data stored in the music composition data memory unit 17 is not various kinds of music composition data unprocessed but music composition data being preprocessed so as to be editable as BGM data and stored.
In each music composition, an introduction portion is located at the beginning, and an ending portion is located at the end. Generally, the introduction portion is the introduction portion of the music composition and indicates the start of the music composition. In addition, the ending portion indicates the end of the music composition, and is used to smooth the flow to the next music composition. Hence, in the case that a music composition is used as BGM, when the length of the video/audio data to which BGM should be added is longer than that of the selected music composition, the introduction portion of the music composition is begun to be played, the main portion is played repeatedly, and the ending portion is disposed in the end, whereby the length can be aligned with the length of the video/audio data. The main portion of the music composition is herein the portion other than the introduction portion and the ending portion of the music composition. On the other hand, when the length of the video/audio data to which BGM should be added is shorter than that of the music composition, the length of the main portion of the music composition is adjusted, and the ending portion is started in the middle of the main portion, whereby the length can be aligned with the length of the video/audio data. However, in the case that this kind of editing is carried out, an uncomfortable feeling is aroused in the music when the music composition is shifted from the main portion to the ending portion.

In the music composition data editing device according to Embodiment 2, the introduction portion is first reproduced as BGM, and a connecting portion is disposed at the position where the music composition is shifted from the main portion to the ending portion. With this deposition of the connecting data, even in the case of BGM, the length of which is aligned with the length of each piece of video/audio data, the music can be heard without arousing any uncomfortable feeling, and the music composition of BGM can be finished just like an image visualized by the user.
As in the music composition data editing device according to Embodiment 1 described above, in the music composition data editing device according to Embodiment 2, the connecting portion being disposed at the position where the music composition is shifted from the main portion to the ending portion, unit data being "dominant" or unit data changing from "subdominant" to "dominant" is selected from the music composition. The unit data selected as described above is connecting data that is disposed at the position where the music composition is shifted from the main portion to the ending portion.

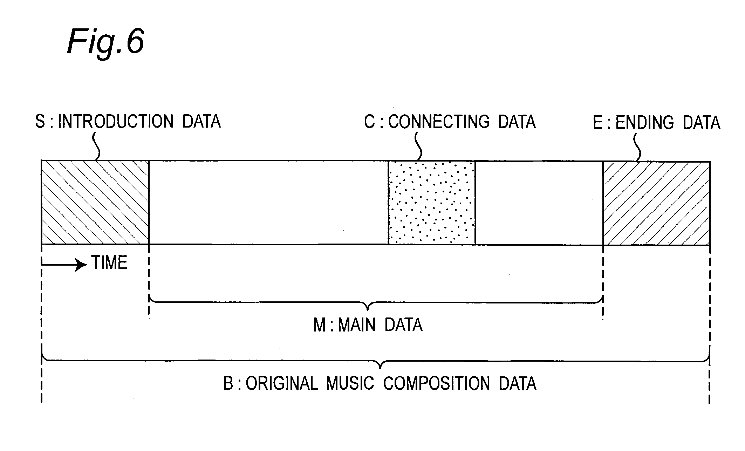

FIG. 6 schematically shows an example of original music composition data that is not yet stored in the music composition data memory unit 17 as original music composition data B. In FIG. 6, introduction data S serving as the introduction portion of the original music composition data B, main data M serving as the main portion, connecting data C serving as the connecting portion selected, and ending data E serving as the ending portion are shown. In the music composition data editing device according to Embodiment 2, the introduction data S, the main data M, the connecting data C and the ending data E, obtained from the original music composition data B by division and extraction in the time-axis direction, are stored in the music composition data memory unit 17 as the music composition data being editable as BGM. As the connecting data C, preferable unit data may be newly formed beforehand, without being selected from the music composition.

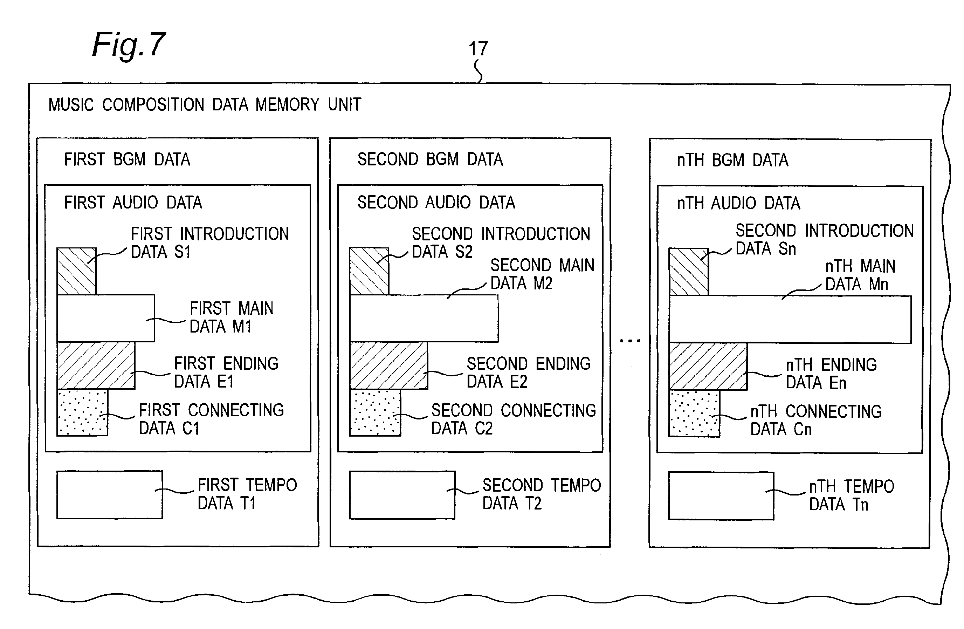

In the music composition data memory unit 17, BGM data serving as multiple pieces of music composition data extracted as described above is stored. FIG. 7 is a view conceptually showing multiple pieces of BGM data stored in the music composition data memory unit 17. In FIG. 7, first BGM data includes first audio data and first tempo data T1, and the first audio data comprises first introduction data S1, first main data M1, first ending data E1 and first connecting data C1. In the first tempo data T1, tempo information indicating the tempo Tp of a music composition is recorded. As described above, multiple pieces of BGM data formed by preprocessing original music composition data are stored in the music composition data memory unit 17.

The music composition data editing unit 18 of the editing unit 3 edits BGM data selected from multiple pieces of the BGM data stored in the music composition data memory unit 17 according to the time-axis length (reproduction time) of the video/audio data input to the video/audio data input unit 1. The music composition data editing unit 18 receives information on the time-axis length (reproduction time) of the input video/audio data from the controller 7, and calculates the reproduction time of the main data M of the BGM data selected according to the information. On the basis of the result of the calculation, the BGM data is edited so that the introduction data S is first reproduced, and then the main data M, the connecting data C and the ending data E are reproduced. In the audio data mixture unit 4, the edited BGM data is mixed with the audio data of the video/audio data input to the video/audio data input unit 1, whereby edited audio data is formed.

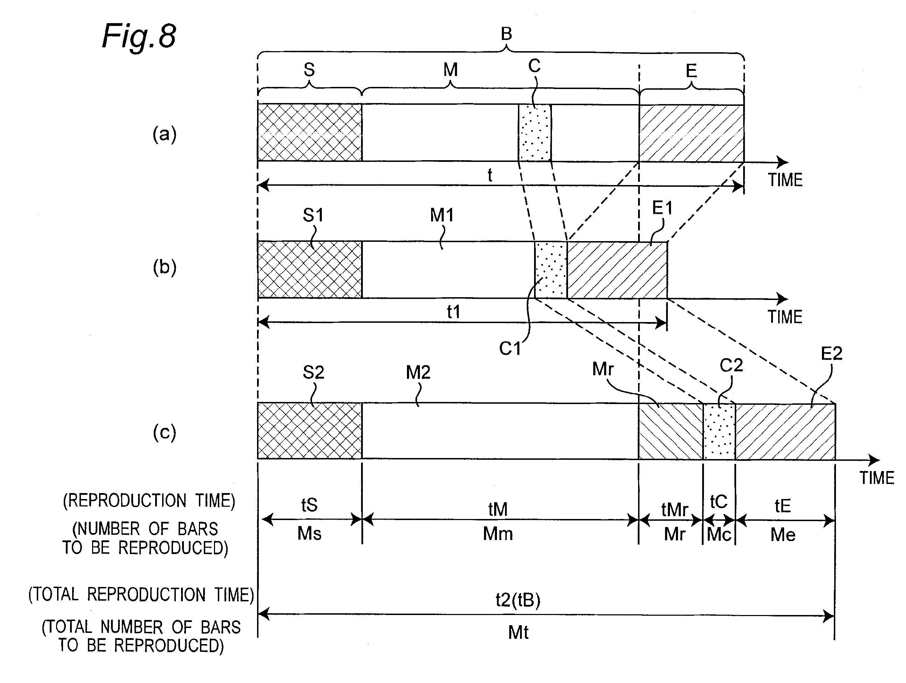

FIG. 8 is a conceptual view showing how the introduction data S, the main data M, the connecting data C and the ending data E of the original music composition data B are disposed in the edited BGM data. A portion (a) of FIG. 8 shows an example of the original music composition data B; in this example, a predetermined bar in the middle portion of the main data M is divided in the time-axis direction and extracted as the connecting data C. A portion (b) of FIG. 8 shows first BGM data (t1 < t), the length of which is shorter than the time-axis length (time = t) of the original music composition data B, and a portion (c) of FIG. 8 shows second BGM data (t2 > t), the length of which is longer than the time-axis length (time = t) of the original music composition data B. As shown in FIG. 8, in either case, the introduction data S, the main data M, the connecting data C and the ending data E are reproduced sequentially.

Next, a calculation method will be described in which BGM data selected by the user is added to the video/audio data that is input to the video/audio data memory unit 10 and should be edited so that synchronization is established at the start point and the end point.

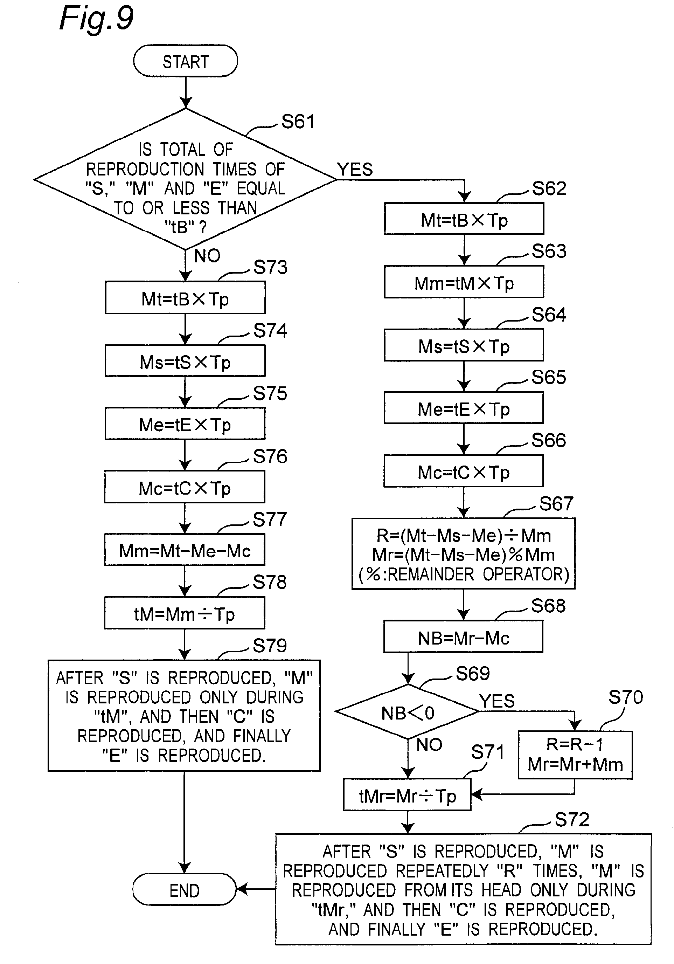

FIG. 9 is a flowchart showing the method of adding the selected BGM data to the video/audio data that should be edited so that synchronization is established at the start point and the end point.
In the music composition data editing device according to Embodiment 2, in the case that any one piece of the BGM data stored in the music composition data memory unit 17 is selected, the selected BGM data is edited so that its length corresponds to the length of the input video/audio data; the basic idea of this editing is described below.

For the purpose of reproducing the BGM data selected by the user during a predetermined time corresponding to the video/audio data, editing is carried out so that the main data M is reproduced repeatedly zero times or more within the time obtained by subtracting the time for the introduction data S, the time for the connecting data C and the time for the ending data E from the predetermined time, and so that the main data M is reproduced in bar unit during the extra time. Hence, it is necessary to calculate how many bars in the main data M are reproduced.

The method for reproducing the selected BGM data so that its length is aligned with the time-axis length (total reproduction time) of the video/audio data that is input so as to be edited will be described using the flowchart shown in FIG. 9. In FIG. 9, tB represents the total reproduction time of the video/audio data that should be edited. tS represents the reproduction time of the introduction data S. tM represents the reproduction time of the main data M of the selected BGM data. tMr represents the reproduction time of the main data M during the extra time in the total reproduction time of the video/audio data that should be edited. tC represents the reproduction time of the connecting data C. tE represents the reproduction time of the ending data E. Furthermore, Tp represents the tempo of tempo information T. Mt represents the number of all the bars to be reproduced during the total reproduction time of the video/audio data that should be edited. Ms represents the number of bars to be reproduced in the introduction data S. Mm represents the number of bars to be reproduced in the main data M. Mc represents the number of bars to be reproduced in the connecting data C. Me represents the number of bars to be reproduced in the ending data E. Mr represents the number of bars to be reproduced in the main data M during the extra time in the total reproduction time of the video/audio data that should be edited. R represents the number of times the reproduction of the main data M is repeated during the total reproduction time cf the video/audio data that should be edited.

At step S61 shown in FIG. 9, a judgment is made as to whether the total (tS + tM + tE) of the reproduction times of the introduction data S, the main data M and the ending data E in the selected BGM data is equal to or less than the total reproduction time tB of the video/audio data that is input so as to be edited. If the total time (tS + tM + tE) is equal to or less than the total reproduction time tB, the tempo Tp is multiplied to the total reproduction time tB at step S62, whereby the total number of bars Mt is calculated.

Next, at step S63, the tempo Tp is multiplied to the reproduction time tM of the main data M, whereby the number of bars Mm in which the main data M is reproduced is calculated. At step S64, the tempo Tp is multiplied to the reproduction time tS of the introduction data S, whereby the number of bars Ms in which the introduction data S is reproduced is calculated. At step 65, the tempo Tp is multiplied to the reproduction time tE of the ending data E, whereby the number of bars Me in which the ending data E is reproduced is calculated. Furthermore, at step S66, the tempo Tp is multiplied to the reproduction time tC of the connecting data C, whereby the number of bars Mc in which the connecting data C is reproduced is calculated.

Next, at step S67, the number of bars Ms of the introduction data S and the number of bars Me of the ending data E are subtracted from the total number of bars Mt, and the result of the calculation is divided by the number of bars of the main data M, whereby the number of repetition times R of the main data M is calculated. The remainder of the division is the number of extra bars Mr in which the main data M is reproduced.
At step S68, the number of bars Mc of the connecting data C is subtracted from the number of extra bars Mr, and a judgment value NB is obtained. This judgment value NB is a value depending on which a judgment is made as to whether the connecting data C is reproduced in the number of extra bars Mr calculated.
At step S69, a judgment is made as to whether the judgment value NB obtained at step S68 is positive or negative. If the judgment value NB is negative, the number of repetition times R of the main data M is decreased by 1, and the number of bars Mm of the main data M is added to the number of extra bars Mr at step S70.

In the case that the judgment value NB is not negative at step S69, after the operation at step S70, the number of extra bars Mr is divided by the tempo Tp at step S71. As a result, the extra time tMr in which the main data M is reproduced is calculated.
At step S72, first, the introduction data S in the selected BGM data is reproduced. Then, the main data M is reproduced repeatedly only the number of repetition times R, the main data M is reproduced from its head only during the extra time tMr, and then the connecting data C and the ending data E are reproduced sequentially. With this reproduction, the selected BGM data is edited and reproduced according to the length (the total reproduction time) of the video/audio data that is input so as to be edited. Because step S72 is a step at which the BGM data selected by the user is reproduced on the basis of the reproduction time calculated for each piece of data, if it is desired that only the calculation result of the reproduction time of each piece of data is obtained, step S72 is not necessary.

On the other hand, if the total (tS + tM + tE) of the reproduction times of the introduction data S, the main data M and the ending data E in the selected BGM data is not equal to or less than the total reproduction time tB at step S61, the tempo Tp is multiplied to the total reproduction time tB at step S73, whereby the total number of bars Mt is calculated. Furthermore, at step S74, the tempo Tp is multiplied to the reproduction time tS of the introduction data S, whereby the number of bars Ms in which the introduction data S is reproduced is calculated. At step S75, the tempo Tp is multiplied to the reproduction time tE of the ending data E, whereby the number of bars Me in which the ending data E is reproduced is calculated. Next, at step S76, the tempo Tp is multiplied to the reproduction time tC of the connecting data C, whereby the number of bars Mc in which the connecting data C is reproduced is calculated.

At step S77, the number of bars Ms of the introduction data S, the number of bars Me of the ending data E and the number of bars Mc of the connecting data C are subtracted from the total number of bars Mt, whereby the number of bars Mm in which the main data M is reproduced is calculated. At step S78, the number of bars Mm in which the main data M is reproduced is divided by the tempo Tp, whereby the time tM in which the main data M is reproduced is calculated.
At step S79, after the introduction data S of the selected BGM data is reproduced, the main data M is reproduced only during the time tM calculated at step S78. Then, the connecting data C and the ending data E are reproduced sequentially. With this reproduction, the selected BGM data is edited and reproduced accurately according to the length (the total reproduction time) of the video/audio data that is input so as to be edited. Like step 72, step S79 is a step at which the BGM data selected by the user is reproduced on the basis of the reproduction time calculated for each piece of data; hence, if it is desired that only the calculation result of the reproduction time of each piece of data is obtained, step S79 is not necessary.

Although the reproduction operations at step 72 and step 79 can be processed using the music composition data editing unit 18, it is possible that the edited BGM data is transmitted to the video/audio data synthesis unit 5 via the audio data mixture unit 4, that the video data is synchronized with the edited BGM data, and that the user makes confirmation on the display unit 9.
As shown in FIG. 9, the program for reproducing music composition data according to the present invention is a program derived from the method for editing the BGM data selected by the user and for reproducing the edited BGM data, and the recording medium in which this program is recorded is a recording medium in which the program for reproducing music composition data according to the present invention is recorded.

The music composition data reproducing method according to Embodiment 2 of the present invention is configured that, first, the introduction data S of the BGM data is reproduced, and the main data M is reproduced beginning from its head only during a predetermined time, and then the connecting data C is reproduced. In the music composition data recording method according to Embodiment 2 of the present invention, because either of the unit data in which code information is "dominant" or the unit data changing from "subdominant" to "dominant" is used as the connecting data C, no sound is heard unnaturally at the point of switching from the main data M to the connecting data C, regardless of whether the code of the last bar of the main data M at the position of switching from the main data M to the connecting data C is "tonic," "subdominant" or "dominant."

Furthermore, in the music composition data reproducing method according to Embodiment 2 of the present invention, the position at which switching is carried out from the middle of the main data M to the connecting data C is calculated on the basis of the number of bars, as made clear at step 71 and step 78 shown in FIG. 9, switching is not carried out in the middle of bar. Hence, musical connection does not become unnatural at the point where switching is carried out from the main data M to the connecting data C.

In the music composition data recording method according to Embodiment 2 of the present invention, the original music composition data of digital audio data is divided in the time-axis direction, whereby the introduction data S, the main data M, the ending data E and the connecting data C are formed and recorded in a recording medium. Hence, the audio data edited using the music composition data reproducing method according to Embodiment 2 of the present invention can be reproduced while having a difference from the predetermined reproduction time by less than one bar.

In the music composition data reproducing method according to Embodiment 1 and Embodiment 2 of the present invention, the main data M is repeated, and the position of the point of switching to the connecting data C in the middle of the main data M is calculated in bar unit, whereby the difference between the total reproduction time of the video/audio data to be edited and the reproduction time of the edited BGM data is less than one bar.

Because the music composition data recording method and the music composition data reproducing method according to Embodiment 2 of the present invention is configured so that the introduction portion of a music composition is divided and recorded, the introduction portion of the music composition can be reproduced repeatedly in Embodiment 1, in addition to the effect of Embodiment 1 described above. However, because the main data serving as the main portion of the music composition is reproduced repeatedly after the introduction portion, Embodiment 2 is effective in improving the quality of the edited BGM data and enhancing the extensibility of the user editing work.

Although data recorded by digital audio is used as ordinary original music composition data in the descriptions of Embodiment 1 and Embodiment 2 of the present invention, the original music composition data to be used may have a compressed audio format, a MIDI format or the like.

As described in the descriptions of the descriptions of Embodiment 1 and Embodiment 2 according to the present invention, the connecting data C may be formed using a method for extracting data from the BGM data concerned, or newly formed data may be used as the connecting data C.
Although the present invention has been described with respect to its preferred embodiments in some detail, the disclosed contents of the preferred embodiments may change in the details of the structure thereof, and any changes in the combination and sequence of the component may be attained without departing from the scope and spirit of the claimed invention.

### INDUSTRIAL APPLICABILITY

The present invention provides a music composition data editing device and a music composition data editing method, capable of editing a desired music composition so that its performance time is aligned with the reproduction time of video/audio data, thereby being high in industrial applicability and useful.

## Claims

1. A music composition data editing device comprising:
a video/audio data input unit that receives video/audio data edited to have a predetermined reproduction time and divides said video/audio data into video data and audio data,
a music composition data memory unit that stores multiple pieces of music composition data each comprising main data, ending data, connecting data and tempo data,
a music composition data editing unit that edits said music composition data so as to be aligned with the predetermined reproduction time of video/audio data input to said video/audio data input unit,
an audio data mixture unit that mixes said audio data divided using said video/audio data input unit with said music composition data edited using said music composition data editing unit, and
a video/audio data output unit that outputs said video data divided using said video/audio data and said audio data mixed using said audio data mixture unit.

2. The music composition data editing device according to claim 1, wherein the reproduction time of said main data of music composition data is calculated in bar unit, and said connecting data is disposed between said main data, said reproduction time of which is calculated, and the ending data so as to carry out alignment at the start point and the end point of said video data input to said video/audio data input unit.

3. The music composition data editing device according to claim 1, wherein said music composition data memory unit has introduction data divided from each piece of music composition data, and said music composition data editing unit calculates the reproduction time of said main data of said music composition data in bar unit, disposes said introduction data at the beginning, disposes said main data, the reproduction time of which is calculated, next, and then disposes said connecting data and said ending data, so as to carry out alignment at the start point and the end point of said video data input to said video/audio data input unit.

4. A music composition data editing method comprising:
an inputting step of inputting video/audio dataedited to have a predetermined reproduction time,
a dividing step of obtaining said predetermined reproduction time of said video/audio data input at said inputting step and dividing said video/audio data into video data and audio data,
a selecting step of selecting music composition data from said music composition data memory unit that stores multiple pieces of music composition data each comprising main data, ending data, connecting data and tempo data,
an editing step of calculating the reproduction time of said main data of said music composition data selected at said selecting step and disposing said connecting data between said main data, the reproduction time of which is calculated, and said ending data, so as to be aligned with the predetermined reproduction time of said video/audio data input at said inputting step,
a mixing step of mixing said audio data divided at said dividing step with said music composition data edited at said editing step, and
a step of outputting said video data divided at said dividing step and said audio data mixed at said mixing step.

5. The music composition data editing method according to claim 4, wherein, at said editing step, the reproduction time of said main data of said music composition data selected at said selecting step is calculated in bar unit, and said connecting data is disposed between said main data, the reproduction time of which is calculated, and said ending data so as to carry out alignment at the start point and the end point of said video data input at said inputting step.

6. The music composition data editing method according to claim 4, wherein said music composition data memory unit has introduction data extracted from music composition data, and, at said editing step, the reproduction time of said main data of said music composition data selected at said selecting step is calculated in bar unit, said introduction data is disposed at the beginning, said main data, the reproduction time of which is calculated, is disposed next, and then said connecting data and said ending data are disposed, so as to carry out alignment at the start point and the end point of said video data input at said inputting step.

7. A music composition data recording method wherein at least the ending portion of music composition data is recorded as ending data, the main portion of said music composition data is recorded as main data, unit data, the code information of which is dominant, or unit data changing from subdominant to dominant is recorded as connecting data, and the tempo information of said music composition data is recorded.

8. The music composition data recording method according to claim 7, wherein the introduction portion of said music composition data is recorded as introduction data, and said music composition data comprises said introduction data, said main data, said ending data, said connecting data and said tempo data.

9. A music composition data reproducing method for reproducing the music composition data recorded using said music composition data recording method according to claim 7 during a predetermined time, comprising:
a step of subtracting the reproduction time of said connecting data and the reproduction time of said ending data from said predetermined time,
a step of calculating the reproduction time of said main data in bar unit during the reproduction time calculated at said subtracting step, and
a step of reproducing said main data during the reproduction time calculated in bar unit, and then reproducing said connecting data and said ending data sequentially.

10. A music composition data reproducing method for reproducing the music composition data recorded using said music composition data recording method according to claim 8 during a predetermined time, comprising:
a step of subtracting the reproduction time of said introduction data, the reproduction time of said connecting data and the reproduction time of said ending data from said predetermined time,
a step of calculating the reproduction time of said main data in bar unit during the reproduction time calculated at said subtracting step, and
a step of reproducing said introduction data at the beginning, and reproducing said main data during the reproduction time calculated in bar unit, and then reproducing the connecting data and the ending data sequentially.

11. A music composition data reproducing method for reproducing the music composition data recorded using said music composition data recording method according to claim 7 during a predetermined time, comprising:
a judging step of judging whether the total of the reproduction times of the main data and the ending data of said music composition data is equal to or less than said predetermined time,
a step of calculating the total number of performance bars by multiplying tempo information to said predetermined time if the total reproduction time of said main data and said ending data is equal to or less than said predetermined time at said judging step,
a step of calculating the number of bars of said main data by multiplying tempo information to the reproduction time of said main data,
a step of calculating the number of bars of said ending data by multiplying tempo information to the reproduction time of said ending data,
a step of calculating the number of bars of said connecting data by multiplying tempo information to the reproduction time of said connecting data,
a step of calculating the number of repetition times of said main data by subtracting the number of bars of said ending data from the total number of performance bars and by dividing the result of the subtraction by the number of bars of said main data, and calculating the number of extra bars of said main data as the remainder of the division,
a step of subtracting the number of bars of said connecting data from the number of extra bars of said main data and subtracting one from the number of repetition times of said main data if the result of the subtraction is negative, and adding the number of bars of said main data to the number of extra bars of said main data,
a step of calculating the reproduction time of the extra portion of said main data by dividing the number of extra bars of the new main data obtained at the step of the addition by tempo information,
a step of reproducing said main data repeatedly the number of repetition times of said main data and then reproducing the extra portion of said main data from the head of said main data, said connecting data and said ending data sequentially,
a step of calculating the total number of performance bars by multiplying tempo information to said predetermined time if, on the other hand, the total reproduction time of said main data and said ending data is not equal to or less than said predetermined time at said judging step,
a step of calculating the number of bars of said ending data by multiplying tempo information to the reproduction time of said ending data,
a step of calculating the number of bars of said connecting data by multiplying tempo information to the reproduction time of said connecting data,
a step of calculating the number of bars of said main data by subtracting the number of bars of said ending data and the number of bars of said connecting data from the total number of performance bars, and
a step of calculating the reproduction time of said main data by dividing the number of bars of said main data by tempo information, reproducing the main data from the head thereof only during the reproduction time of said main data, and then reproducing said connecting data and said ending data sequentially.

12. A music composition data reproducing method for reproducing the music composition data recorded using said music composition data recording method according to claim 8 during a predetermined time, comprising:
a judging step of judging whether the total of the reproduction times of the introduction data, the main data and the ending data of said music composition data is equal to or less than said predetermined time,
a step of calculating the total number of performance bars by multiplying tempo information to said predetermined time if the total reproduction time of said introduction data, said main data and said ending data is equal to or less than said predetermined time,
a step of calculating the number of bars of said main data by multiplying tempo information to the reproduction time of said main data,
a step of calculating the number of bars of said introduction data by multiplying tempo information to the reproduction time of said introduction data,
a step of calculating the number of bars of said ending data by multiplying tempo information to the reproduction time of said ending data,
a step of calculating the number of bars of said connecting data by multiplying tempo information to the reproduction time of said connecting data,
a step of calculating the number of repetition times of said main data by subtracting the number of bars of said introduction data and the number of bars of said ending data from the total number of performance bars and by dividing the result of the subtraction by the number of bars of said main data, and calculating the number of extra bars of said main data as the remainder of the division,
a step of subtracting the number of bars of said connecting data from the number of extra bars of said main data and subtracting one from the number of repetition times of said main data if the result of the subtraction is negative, and adding the number of bars of said main data to the number of extra bars of said main data,
a step of calculating the reproduction time of the extra portion of said main data by dividing the number of extra bars of the new main data obtained at the step of the addition by tempo information,
a step of reproducing said introduction data, and reproducing said main data repeatedly the number of repetition times of said main data and then reproducing the extra portion of said main data from the head of said main data, said connecting data and said ending data sequentially,
a step of calculating the total number of performance bars by multiplying tempo information to said predetermined time if, on the other hand, the total reproduction time of said introduction data, said main data and said ending data is not equal to or less than said predetermined time at said judging step,
a step of calculating the number of bars of said introduction data by multiplying tempo information to the reproduction time of said introduction data,
a step of calculating the number of bars of said ending data by multiplying tempo information to the reproduction time of said ending data,
a step of calculating the number of bars of said connecting data by multiplying tempo information to the reproduction time of said connecting data,
a step of calculating the number of bars of said main data by subtracting the number of bars of said introduction data, the number of bars of said ending data and the number of bars of said connecting data from the total number of performance bars, and
a step of calculating the reproduction time of said main data by dividing the number of bars of said main data by tempo information, reproducing said introduction data, and reproducing said main data from the head thereof only during the calculated reproduction time of said main data, and then reproducing said connecting data and said ending data sequentially.

13. A music composition data recording medium wherein at least the ending portion of music composition data is recorded as ending data, the main portion of said music composition data is recorded as main data, unit data, the code information of which is dominant, or unit data changing from subdominant to "dominant is recorded as connecting data, and the tempo information of said music composition data is recorded.

14. The music composition data recording medium according to claim 13, wherein the introduction portion of said music composition data is recorded as introduction data, and said music composition data comprises said introduction data, said main data, said ending data, said connecting data and said tempo data.

15. A music composition data reproducing program for reproducing the music composition data recorded using said music composition data recording method according to claim 7 during a predetermined time, comprising:
a judging procedure of judging whether the total of the reproduction times of the main data and the ending data of said music composition data is equal to or less than said predetermined time,
a procedure of calculating the total number of performance bars by multiplying tempo information to said predetermined time if the total reproduction time of said main data and said ending data is equal to or less than said predetermined time in said judging procedure,
a procedure of calculating the number of bars of said main data by multiplying tempo information to the reproduction time of said main data,
a procedure of calculating the number of bars of said ending data by multiplying tempo information to the reproduction time of said ending data,
a procedure of calculating the number of bars of said connecting data by multiplying tempo information to the reproduction time of said connecting data,
a procedure of calculating the number of repetition times of said main data by subtracting the number of bars of said ending data from the total number of performance bars and by dividing the result of the subtraction by the number of bars of said main data, and calculating the number of extra bars of said main data as the remainder of the division,
a procedure of subtracting the number of bars of said connecting data from the number of extra bars of said main data and subtracting one from the number of repetition times of said main data if the result of the subtraction is negative, and adding the number of bars of said main data to the number of extra bars of said main data,
a procedure of calculating the reproduction time of the extra portion of said main data by dividing the number of extra bars of the new main data obtained in the procedure of the addition by tempo information,
a procedure of reproducing said main data repeatedly the number of repetition times of said main data and then reproducing the extra portion of said main data from the head of said main data, said connecting data and said ending data sequentially,
a procedure of calculating the total number of performance bars by multiplying tempo information to said predetermined time if, on the other hand, the total reproduction time of said main data and said ending data is not equal to or less than said predetermined time in said judging procedure,
a procedure of calculating the number of bars of said ending data by multiplying tempo information to the reproduction time of said ending data,
a procedure of calculating the number of bars of said connecting data by multiplying tempo information to the reproduction time of said connecting data,
a procedure of calculating the number of bars of said main data by subtracting the number of bars of said ending data and the number of bars of said connecting data from the total number of performance bars, and
a procedure of calculating the reproduction time of said main data by dividing the number of bars of said main data by tempo information, and reproducing said main data from the head thereof only during the reproduction time of said main data, and then reproducing said connecting data and said ending data sequentially.

16. A music composition data reproducing program for reproducing the music composition data recorded using said music composition data recording method according to claim 8 during a predetermined time, comprising:
a judging procedure of judging whether the total of the reproduction times of the introduction data, the main data and the ending data of said music composition data is equal to or less than said predetermined time,
a procedure of calculating the total number of performance bars by multiplying tempo information to said predetermined time if the total reproduction time of said introduction data, said main data and said ending data is equal to or less than said predetermined time in said judging procedure,
a procedure of calculating the number of bars of said main data by multiplying tempo information to the reproduction time of said main data,
a procedure of calculating the number of bars of said introduction data by multiplying tempo information to the reproduction time of said introduction data,
a procedure of calculating the number of bars of said ending data by multiplying tempo information to the reproduction time of said ending data,
a procedure of calculating the number of bars of said connecting data by multiplying tempo information to the reproduction time of said connecting data,
a procedure of calculating the number of repetition times of said main data by subtracting the number of bars of said introduction data and the number of bars of said ending data from the total number of performance bars and by dividing the result of the subtraction by the number of bars of said main data, and calculating the number of extra bars of said main data as the remainder of the division,
a procedure of subtracting the number of bars of said connecting data from the number of extra bars of said main data and subtracting one from the number of repetition times of said main data if the result of the subtraction is negative, and adding the number of bars of said main data to the number of extra bars of said main data,
a procedure of calculating the reproduction time of the extra portion of said main data by dividing the number of extra bars of the new main data obtained in said addition procedure by tempo information,
a procedure of reproducing the introduction data, and reproducing said main data repeatedly the number of repetition times of said main data and then reproducing the extra portion of said main data from the head of said main data, said connecting data and said ending data sequentially,
a procedure of calculating the total number of performance bars by multiplying tempo information to said predetermined time if, on the other hand, the total reproduction time of said introduction data, said main data and said ending data is not equal to or less than said predetermined time in said judging procedure,
a procedure of calculating the number of bars of said introduction data by multiplying tempo information to the reproduction time of said introduction data,
a procedure of calculating the number of bars of said ending data by multiplying tempo information to the reproduction time of said ending data,
a procedure of calculating the number of bars of said connecting data by multiplying tempo information to the reproduction time of said connecting data,
a procedure of calculating the number of bars of said main data by subtracting the number of bars of said introduction data, the number of bars of said ending data and the number of bars of said connecting data from the total number of performance bars, and
a procedure of calculating the reproduction time of said main data by dividing the number of bars of said main data by tempo information, reproducing said introduction data, and reproducing said main data from the head thereof only during the calculated reproduction time of said main data, and then reproducing said connecting data and said ending data sequentially.

17. A recording medium wherein said music composition data reproducing program according to claim 15 is recorded.

18. A recording medium wherein said music composition data reproducing program according to claim 16 is recorded.
